# EUROPÄISCHE PATENTSCHRIFT

(11) **EP 2 496 519 B1**
(45) Veröffentlichungstag und Bekanntmachung des Hinweises auf die Patenterteilung: **16.07.2014**
(21) Anmeldenummer: 10784463.1
(22) Anmeldetag: 05.11.2010
(51) Int. Cl.: C01B 21/28, F02C 6/10

(54) **VERFAHREN ZUR HERSTELLUNG VON SALPETERSÄURE MITTELS EINER LASTREGELBAREN PRODUKTIONSANLAGE**
METHOD FOR PRODUCING NITRIC ACID BY MEANS OF A LOAD-CONTROLLABLE PRODUCTION SYSTEM
PROCÉDÉ DE PRODUCTION D'ACIDE NITRIQUE À L'AIDE D'UNE INSTALLATION DE PRODUCTION RÉGLABLE EN FONCTION DE LA CHARGE

(30) Priorität: 06.11.2009 EP 09175253
(43) Veröffentlichungstag der Anmeldung: 12.09.2012
(73) Patentinhaber: BASF SE, 67056 Ludwigshafen (DE)
(72) Erfinder: KNEUPER, Heinz-Josef, 67150 Niederkirchen (DE); NICKEL, Jörg Torsten, 69436 Schönbrunn (DE); MENNING, Bernd, 67227 Frankenthal (DE); SCHOLBROCK, Thomas-Michael, 67269 Grünstadt (DE); JOOST, Harald, 67056 Ludwigshafen (DE); HOLZBECHER, Martina, 67067 Ludwigshafen (DE); BAUMANN, Dieter, 67346 Speyer (DE)
(86) Internationale Anmeldenummer: PCT/EP2010/066913
(87) Internationale Veröffentlichungsnummer: WO 2011/054928

(56) Entgegenhaltungen:
- EP-A2- 0 945 400
- US-A- 2 955 917
- US-A- 3 012 082

## Beschreibung

Die vorliegende Erfindung betrifft ein Verfahren zur Herstellung von Salpetersäure, im Rahmen dessen bei Unterlast ein Teil der verdichteten Prozessluft unter Umgehung des chemischen Prozesses zur Energierückgewinnung einem Gasexpander zugeführt wird. Die Erfindung betrifft auch eine Vorrichtung zur Herstellung von Salpetersäure.

Zur Herstellung von Salpetersäure wird allgemein zunächst Ammoniak NH₃ mit Luft reaktiv umgesetzt und Stickoxid NO erzeugt:

4NH₃ + 5O₂→ 4NO + 6H₂O + 907,3 kJ.

Das dabei anfallende Stickoxid NO wird dann zu Stickstoffdioxid NO₂ aufoxidiert:

2NO + O₂ → 2NO₂+ 113,1 kJ.

Anschließend wird das so gewonnene Stickstoffdioxid NO₂ in Wasser absorbiert und es entsteht die Salpetersäure:

4NO₂+ O₂+ 2H₂O → 4HNO₃ + 256,9 / 93,3 kJ.

Damit möglichst viel von dem gewonnenen Stickstoffdioxid NO₂ von Wasser absorbiert wird, geschieht die Absorption in der Regel bei erhöhtem Druck, vorzugsweise bei Drucken zwischen 4 bis 14 bar.

Der für die Umsetzung des als Rohstoff eingesetzten Ammoniaks benötigte Sauerstoff wird in der Regel in Form von Luftsauerstoff zugeführt. Zum Zwecke der Zuführung wird die Prozessluft in einem Kompressor verdichtet und auf einen Druck gebracht, der sowohl der Oxidationsreaktion wie auch der Absorptionsreaktion angepasst ist.

Üblicherweise wird die Energie zur Kompression der Luft einerseits mittels Entspannung des aus der Absorption austretenden Restgases auf Umgebungsdruck und andererseits durch die Verwertung der bei den Umsetzungen freigesetzten Wärmen gewonnen. Die in verschiedenen Ausführungen errichteten Salpetersäureanlagen sind an die jeweiligen speziellen Anforderungen ihres jeweiligen Standortes angepasst.

Einsträngige Salpetersäureanlagen werden üblicherweise mit Nenn-Kapazitäten zwischen 100 bis 1.500 Tonnen Tagesproduktion Salpetersäure errichtet. Bei Verdopplung des Reaktionsteils können somit einsträngig bis zu 2.000 Tonnen, und bei weiterer Optimierung auch bis zu 3.000 Tonnen Tagesproduktion erreicht werden.

Ist die geforderte Tagesproduktion gering oder besitzt ein Standort vergleichsweise niedrige Energiepreise, so wird die Salpetersäure vorzugsweise nach dem Mono-Hochdruck-Verfahren betrieben. Bei diesem Verfahren erfolgen die Verbrennung des Ammoniaks und die Absorption der Stickstoffoxide bei etwa gleichem Druck von ca. 10 bar. Sind große Nenn-Kapazitäten und/oder höhere Säurekonzentrationen gefordert, so stellt eine nach dem Zweidruckverfahren ausgeführte Salpetersäureanlage die wirtschaftlichere Lösung dar. Die hergestellte 60 bis 68 prozentige Salpetersäure wird entweder als solche vertrieben (z.B. für die Herstellung von Dünger oder Kunststoffen) oder sie wird aufkonzentriert.

Beim Zweidruckverfahren geschieht die Verbrennung des eingesetzten Ammoniaks bei einem ersten Druck, nämlich bei einem - verglichen mit dem Absorptionsdruck - niedrigerem Druck. Die bei der Verbrennung gebildeten, nitrosen Gase, auch Nitrosegas genannt, werden allgemein nach der Kühlung mittels Nitrosegasverdichtung auf den zweiten Druck, den Absorptionsdruck gebracht.

Die früher üblichen Anlagen mit Verbrennung bei Normaldruck und Mitteldruckabsorption sind heute durch die wirtschaftlicheren Eindruck- und Zweidruckverfahren abgelöst worden. Die hergestellte Salpetersäure wird auch als unter azeotrope Salpetersäure bezeichnet, da sich bei einem eventuell nachgeschalteten Destillieren einer solchen Säure wegen der Bildung eines Azeotrops nur eine maximale Salpetersäurekonzentration von 68 % erreichen lässt. Zur Überwindung dieser Grenze sind in der Literatur eine große Anzahl von Verfahren vorgestellt worden.

Ein Verfahren zur Herstellung von Salpetersäure nach dem Zweidruck-Verfahren wird beispielsweise in EP 0 945 400) beschrieben. Die Verbrennung des eingesetzten Ammoniaks geschieht bei einem ersten, niedrigen Druck mittels verdichteter Prozessluft, anschließend wird das durch die Verbrennung gebildete Nitrosegas bei einem zweiten, vergleichsweise höheren Druck als dem ersten mindestens teilweise von Wasser absorbiert, wodurch Salpetersäure entsteht. Das nicht absorbierte Restgas wird zwecks Gewinnung von Verdichterarbeit in einem Restgasexpander vom zweiten Druck auf Umgebungsdruck entspannt.

Allgemein umfassen die Anlagen zur Durchführung der vorstehend diskutierten Verfahren einen Maschinenstrang, der mindestens einen Luftverdichter, mindestens einen Nitrosegas-Verdichter sowie mindestens eine Expansionsturbine und mindestens eine Dampfturbine umfasst. Diese Anlagenteile der Salpetersäureanlage bilden eine Maschinengruppe, indem sie über eine gemeinsame Welle angetrieben werden. Angetrieben wird diese Maschinengruppe durch die Dampfturbine einerseits und die Expansionsturbine (einen Restgasexpander) andererseits. Diese vier miteinander zu einem Wellenstrang gekoppelten Turbo-Maschinen sind üblicherweise in Axial-Bauform ausgeführt. Die Maschinengruppe ist in niedrigen Lastbereichen nicht beliebig regelbar, da thermo- und maschinendynamische Gründe dies verhindern.

So lässt sich beispielsweise die Leistung eines Kompressors in der Regel maximal auf 70 bis 80 % seiner Maximalleistung drosseln. Die typische Mindestlast einer wie vorstehend beschriebenen Maschinengruppe liegt daher im Bereich von ca. 70 bis 80 %.

Um rasch und flexibel auf schwankende Märkte reagieren zu können, werden daher häufig mehrere Kleinanlagen betrieben, die im Falle einer geringeren Nachfrage an Salpetersäure sukzessive abgeschaltet werden. Der Betrieb mehrerer Kleinanlagen parallel führt dabei zu gesteigerten Kosten; das An- und Abschalten führt zu einem hohen Verschleiß der Anlagenbauteile, was ebenfalls erhöhte Kosten mit sich bringt.

Eine Aufgabe der vorliegenden Erfindung besteht darin, die bekannten Eindruck- und Zweidruckverfahren zur Herstellung von Salpetersäure dahingehend zu optimieren, dass diese in einem größeren Lastbereich durchgeführt werden können. Ferner besteht eine Aufgabe der Erfindung darin, Anlagen zur Durchführung derartiger Verfahren zur Verfügung zu stellen.

Die Erfindung löst die Aufgaben durch die Bereitstellung eines Verfahrens zur Herstellung von Salpetersäure mit einer Konzentration im Bereich von 50 bis 76 % aus Ammoniak und sauerstoffhaltigem Gas nach dem Eindruck- oder Zweidruckverfahren, bei dem die Verbrennung des eingesetzten Ammoniaks mittels verdichteter Prozessluft, die in mindestens einem Verdichter verdichtet wurde, geschieht.

Das durch die Verbrennung gebildete Nitrosegas wird mindestens teilweise von Wasser absorbiert, wodurch Salpetersäure entsteht. Das nicht absorbierte Restgas wird zwecks Rückgewinnung von Verdichtungsarbeit in einem oder auch mehreren Gasexpandern, bevorzugt auf Umgebungsdruck, expandiert. Das Verfahren ist dadurch gekennzeichnet, dass bei Unterlast zumindest ein Teil der verdichteten Prozessluft unter Umgehung des chemischen Prozesses mindestens einem Gasexpander zugeführt wird.

Als sauerstoffhaltiges Gas wird häufig Luft eingesetzt, es kann jedoch auch von Vorteil sein, mit Sauerstoff angereicherte Luft einzusetzen (z.B. mit einem O₂-Gehalt von 22 - 50 Vol-%).

Die Erfindung betrifft insbesondere ein großtechnisches Verfahren zur Herstellung von Salpetersäure einer Konzentration im Bereich von 50 bis 76 % aus Ammoniak und sauerstoffhaltigem Gas nach dem Eindruck- oder Zweidruckverfahren, bei dem die Verbrennung des eingesetzten Ammoniaks mittels verdichteter Prozessluft, die in mindestens einem Verdichter (3) verdichtet wurde, geschieht, und das durch die Verbrennung gebildete Nitrosegas mindestens teilweise von Wasser absorbiert wird, wodurch Salpetersäure entsteht, und das nicht absorbierte Restgas zwecks Gewinnung von Verdichterarbeit in einem Gasexpander (7) expandiert wird, dadurch gekennzeichnet, dass bei Unterlast zumindest ein Teil der verdichteten Prozessluft unter Umgehung des chemischen Prozesses einem Gasexpander (7) zugeführt wird.

Die Erfindung betrifft insbesondere ein Verfahren bei dem die Herstellung der Salpetersäure nach dem Zweidruckverfahren erfolgt.

Die Erfindung betrifft auch ein Verfahren, das in einer Anlage durchgeführt wird, die einen oder zwei NO-Verdichter (5, 6) umfasst.

Die Erfindung betrifft insbesondere ein Verfahren, wobei das Verfahren in einer Anlage durchgeführt wird, die mindestens 2 Gasexpander umfasst.

Die Erfindung betrifft insbesondere ein Verfahren, bei dem ein Teil der verdichteten Prozessluft unter Umgehung des chemischen Prozesses mindestens einem Gasexpander (7), zugeführt wird, der einem weiteren Gasexpander (8), in welchem das nicht absorbierte Restgas absorbiert wird, vor- oder nachgeschaltet ist.

Die Erfindung betrifft auch ein Verfahren, bei dem zumindest ein Teil der verdichteten Prozessluft, die unter Umgehung des chemischen Prozesses dem Gasexpander (7) zugeführt wird, erwärmt wird.

Die Erfindung betrifft insbesondere ein Verfahren, das in einer Anlage durchgeführt werden kann bzw. wird, die mindestens eine Absorptionseinrichtung (21) zur Absorption von Nitrosegas in Wasser umfasst, die in einem Lastbereich von 35 bis 100 % betrieben werden kann.

Gegenstand der Erfindung ist ferner eine Vorrichtung zur Durchführung eines Verfahrens wie oben beschrieben. Diese Vorrichtung kann vorzugsweise eine Dampfturbine, mindestens einen Luftverdichter, mindestens einen NO-Verdichter (5) und mindestens einen Gasexpander (7) umfassen, wobei bevorzugt über eine Bypassleitung (37) und eine Steuerung eine (gezielte) Luftzuführung an verschiedenen Einlassöffnungen des bzw. der Gasexpander (7) erfolgen kann.

Mit Hilfe des erfindungsgemäßen Verfahrens lassen sich Anlagen zur Herstellung von Salpetersäure rasch und materialschonend auf Lastwechsel bei der Herstellung von Salpetersäure einstellen. Dadurch, dass bei Unterlast zumindest ein Teil der verdichteten Prozessluft unter Umgehung des chemischen Prozesses direkt dem mindestens einen Gasexpander zugeführt wird, kann in vorteilhafter Weise die in der verdichteten Prozessluft enthaltene Kompressionsenergie zum Betrieb der Maschinengruppe(z.B. umfassend die Verdichter der Anlage) bzw. zum Betrieb der Anlage genutzt werden.

Der Begriff "Unterlast" bedeutet im Rahmen der vorliegenden Erfindung, dass bereits bei einer Last der Anlage, die unter 100 % der Volllast der Anlage liegt (z.B. unter 80% oder unter 75%), ein Teil der verdichteten Prozessluft unter Umgehung des chemischen Prozesses mindestens einem Gasexpander zugeführt wird.

Gemäß einer bevorzugten Ausführungsform der Erfindung wird bei geringerem Salpetersäurebedarf zuerst die Maschinengruppe (Verdichter und Turbinen) auf einen Lastbereich bis etwa 75 % gedrosselt und bei geringeren Lastbereichen ein Teil der verdichteten Prozessluft unter Umgehung des chemischen Prozesses mindestens einem Gasexpander zugeführt. Gemäß einer weiteren bevorzugten Ausführungsform der Erfindung wird der Lastbereich der Maschinengruppe (Verdichter und Turbinen) nur geringfügig gedrosselt und zumindest einen Teil der verdichteten Prozessluft unter Umgehung des chemischen Prozesses zumindest einem Gasexpander zugeführt.

Der Anteil der verdichteten Prozessluft, der (beispielsweise über einen Bypass) unter Umgehung des chemischen Prozesses dem Expander zugeführt wird, variiert bezogen auf die Gesamtmenge der verdichteten Prozessluft in Abhängigkeit der Last der Anlage. Allgemein wird bei Lastreduktion zuerst der Luftverdichter mit einem Drallregler auf einen Lastbereich bis etwa 70 %, und daraufhin der Maschinenstrang um weitere 50 % zurückgeregelt, so dass dem chemischen Prozess insgesamt etwa 35 Vol-%, aber auch minimal 20 Vol%, der verdichteten Prozessluft zugeführt werden.

Die 50 Vol% der Gesamtluft entsprechende Luftmenge wird unter Umgehung des chemischen Prozesses zumindest einem Gasexpander zugeführt. Die Mengenanpassung der aus dem NO-Verdichter dem chemischen Prozess zugeführten Nitrosegase erfolgt unter Rückführung von der Druckseite zur Saugseite des Verdichters, bevorzugt über mindestens ein Regelventil.

Der Begriff "Last" bzw. "Lastbereich" bedeutet im Rahmen der vorliegenden Erfindung die Variation der Produktionskapazität der Anlage zur Herstellung von Salpetersäure.

Unter "Umgehung des chemischen Prozesses" ist im Sinne der Erfindung zu verstehen, dass der Teil der verdichteten Prozessluft, der nicht zur Synthese von Salpetersäure eingesetzt wird, ohne chemische Umsetzung dem bzw. den Gasexpandern zugeführt wird.

Gemäß einer bevorzugten Ausführungsform der Erfindung wird der Teil der verdichteten Prozessluft vor dem Einspeisen in den Gasexpander erhitzt. Hierzu wird zumindest ein Teil der unter Umgehung des chemischen Prozesses geleiteten verdichteten Prozessluft unter Verwendung von Abwärme aus dem Herstellungsprozess, beispielsweise über einen Wärmetauscher, zusätzlich erhitzt, wodurch das erfindungsgemäße Verfahren noch energieeffizienter wird.

Das Verfahren zur Herstellung von Salpetersäure kann allgemein nach dem Eindruck- bzw. oder Zweidruckverfahren durchgeführt werden. Gemäß einer bevorzugten Ausführungsform der Erfindung wird das Verfahren nach dem Zweidruckverfahren durchgeführt. Die Durchführung des erfindungsgemäßen Verfahrens nach dem Zweidruckverfahren hat den Vorteil, dass höhere Salpetersäurekonzentrationen durch einen hohen Absorptionsdruck erreicht werden können und zudem eine bessere Verbrennungsausbeute durch niedrigen Absorptionsdruck erzielt werden kann.

Gemäß der Erfindung umfasst die Anlage zur Durchführung des erfindungsgemäßen Verfahrens eine Maschinengruppe, die von einer gemeinsamen Welle aus angetrieben wird, und eine Dampfturbine, einen Luftverdichter, einen NO-Verdichter sowie einen Gasexpander umfasst.

Um das erfindungsgemäße Verfahren in bestehenden Anlagen zur Herstellung von Salpetersäure durchführen zu können, können diese beispielsweise mit einer regelbaren Bypassleitung zwischen dem Luftverdichter und dem Gasexpander, der zum Antrieb des Maschinenstranges dient, nachgerüstet werden. Somit lässt sich das erfindungsgemäße Verfahren auf einfache Art und Weise auch in bestehende Anlagen zur Salpetersäureherstellung durch einfache Umrüstung durchführen. Gegenstand der Erfindung sind auch Vorrichtungen zur Durchführung eines Verfahrens zur Herstellung von Salpetersäure, wie oben beschrieben. In einer besonderen Ausführung der Erfindung erfolgt die Zuführung der Luft in den (bzw. die) Gasexpander über mindestens eine variable Einlasssteuerung. Bevorzugt kann die Zuführung (z.B. in Abhängigkeit des Drucks) an verschiedenen Zugängen des jeweiligen Gasexpanders (7, 8) erfolgen. So können an einem Gasexpander auch mehrere Zuführungsöffnungen angesteuert werden.

Nach einer bevorzugten Ausführungsform der Erfindung umfasst die Anlage zur Durchführung des erfindungsgemäßen Verfahrens eine Maschinengruppe, die eine Dampfturbine, einen Luftverdichter, zwei NO-Verdichter und einen (oder mehrere) Gasexpander umfasst.

Dadurch, dass das erfindungsgemäße Verfahren in diesem Falle in einer Anlage durchgeführt wird, die zwei NO-Verdichter umfasst, ist es möglich, im Falle einer geringeren Auslastung der Anlage im Lastbereich von etwa 50 % einen der beiden NO-Verdichter abzuschalten. Bei zwei vorhandenen NO-Verdichtern können diese gleich oder verschieden groß ausgestaltet sein. Der Vorteil des Einsatzes zweier NO-Verdichter im Vergleich zum Einsatz eines NO-Verdichters liegt auch darin, dass im mittleren Lastbereich einer der Verdichter abgeschaltet werden kann, wohingegen bei Anlagen, mit nur einem Verdichter ein Teil des verdichteten NOs im Kreis geführt werden muss, wodurch es in den entsprechenden Kreisläufen zu erhöhten Mengen an Dünnsäure kommen kann, was im Prozess die Erreichbarkeit einer Produktsäurekonzentration von 68 % stört.

Gemäß der Erfindung umfasst die Anlage zur Durchführung des erfindungsgemäßen Verfahrens mindestens einen Gasexpander (z.B. 1, 2 oder 3 Expander), vorzugsweise einen mehrwelligen bzw. zwei einwellige Gasexpander. Der Vorteil einer solchen Verfahrensführung liegt in der verbesserten Regelbarkeit der Gesamtanlage. In dem Fall, in dem der Expander aus zwei Aggregaten besteht, kann beispielsweise das erste Aggregat mit der überschüssigen verdichteten Prozessluft und das zweite Aggregat mittels Prozessgas angetrieben werden, oder umgekehrt.

Wie im beschreibungseinleitenden Teil der Beschreibung bereits ausgeführt wurde, erfolgt die Bildung von Salpetersäure durch Absorption von gasförmigen Stickoxiden mit einer Oxidationszahl ≥2 in wässriger Lösung. Die Stickoxide werden dabei als so genanntes Nitrosegas, das z.B. durch die Verbrennung von Ammoniak mit verdichteter Prozessluft erhalten wurde, bereitgestellt. Die Einrichtungen zur Absorption der Stickoxide, bzw. des Nitrosegases sollen eine möglichst große Phasengrenzfläche zwischen Nitrosegas und wässriger Lösung bereitstellen, um den Stoffübergang der Stickoxide zu begünstigen. Darüber hinaus sollen entsprechende Einrichtungen zur Abfuhr der im Rahmen des erfindungsgemäßen Verfahrens freigesetzten Wärme bereitgestellt werden.

Im Rahmen des erfindungsgemäßen Verfahrens sind die Absorptionseinrichtungen der Vorrichtung zur Herstellung von Salpetersäure hinsichtlich ihrer Flexibilität der Flexibilität der Maschinengruppe angepasst.

Das Verfahren wird somit gemäß einer Ausführungsform der Erfindung in einer Anlage zur Herstellung von Salpetersäure durchgeführt, die eine oder mehrere Absorptionseinrichtungen zur Absorption von Nitrosegas in Wasser umfasst, deren Lastbereich dem Lastbereich der Maschinengruppe angepasst ist. Der Lastbereich, bei dem die Absorptionseinrichtung bzw. die Absorptionseinrichtungen betreibbar sind, liegt allgemein im Bereich von 35 bis 100 %.

Die Absorptionseinrichtungen umfassen gemäß einer allgemeinen Ausführungsform der Erfindung Einbauten, die die Durchführung des erfindungsgemäßen Verfahrens über einen Lastbereich von 35 bis 100 % hinweg gestatten.

Die in den Absorptionseinrichtungen angeordneten Einbauten sind gemäß einer bevorzugten Ausführungsform der Erfindung Böden, ausgewählt aus der Gruppe der Ventilböden, Glockenböden, Siebböden und Tunnelböden sowie Kombinationen der vorstehend genannten Bodentypen. Gemäß einer bevorzugten Ausführungsform der Erfindung umfassen die Absorptionseinrichtungen ferner Siebböden. Der Einsatz der vorstehend genannten Bodentypen gestattet die Durchführung des erfindungsgemäßen Verfahrens in einem sehr breiten Lastbereich von 35 bis 100 % hinweg. Vorteilhafterweise können durch den Einsatz dieser Bodentypen auch Kurzschlüsse und Durchbrüche vermieden werden.

Gemäß einer weiteren bevorzugten Ausführungsform der Erfindung werden zur Durchführung dieses erfindungsgemäßen Verfahrens Trennwandkolonnen verwendet.

Die Erfindung wird im Folgenden an vier Beispielen mit je einer Figur näher erläutert:

### Bezugszeichenlegende:

- 1: Dampfturbine
- 3: Luftverdichter
- 5: NO-Verdichter
- 6: Zweiter NO-Verdichter
- 7: Expander
- 8: Zweiter Expander
- 9: Schalldämpfer
- 11: Wärmetauscher
- 13: Prozessluft
- 15: Atmosphäre
- 17: NH₃
- 19: NH₃-Brenner
- 21: Absorber
- 23: Wasser
- 25: Restgas
- 27: NH₃
- 29: HNO₃, 68 %
- 31: Dampftrommel
- 33: HNO₃-Entgaser
- 35: HNO₃, 68%
- 37: Bypassleitung

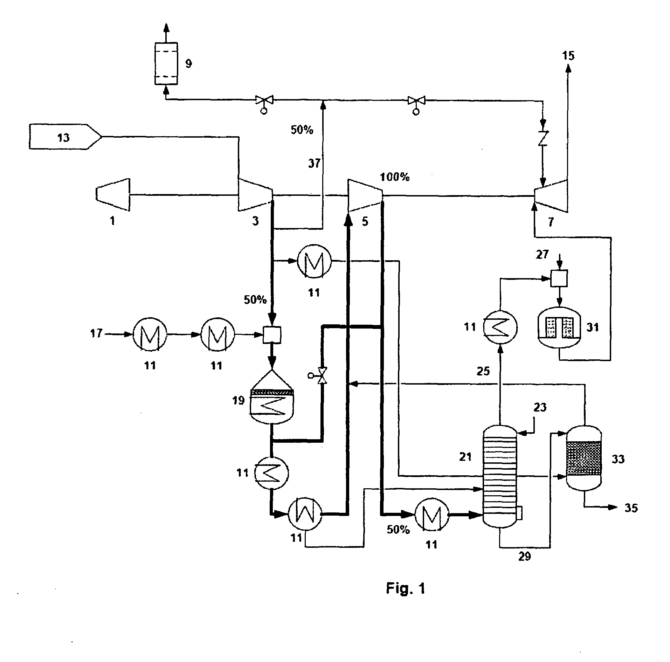

Die beiliegenden Figuren, Figur 1 bis Figur 4, erläutern die Erfindung anhand von Ausführungsbeispielen. Diese zeigen in:
- Figur 1: ein Anlagenschaltbild einer typischen Zweidruckanlage mit Luftverdichter 3, einem NO-Verdichter 5, einem Expander 7 sowie einer Dampfturbine 1. Die Prozessluft 13 wird nach dem Luftverdichter 3 geteilt, eine Hälfte wird über die Synthese in den NO-Verdichter 5 und anschließend in die Absorptionskolonne 21 gefahren. Um den NO-Verdichter 5 in einem fahrbaren Betriebspunkt zu betreiben, wird ein Bypass installiert, der die druckseitige überschüssige Gasmenge saugseitig wieder zuführt. Der andere Teil der zuvor aufgeteilten Prozessluft 13 wird direkt in eine Zwischeneinspeisung im Expander 7 entspannt. Die Zuführung kann hier an einen Einlass im Expander 7 erfolgen, sie kann jedoch auch variabel über mehrere separate Einlassöffnungen im Expander 7 erfolgen.

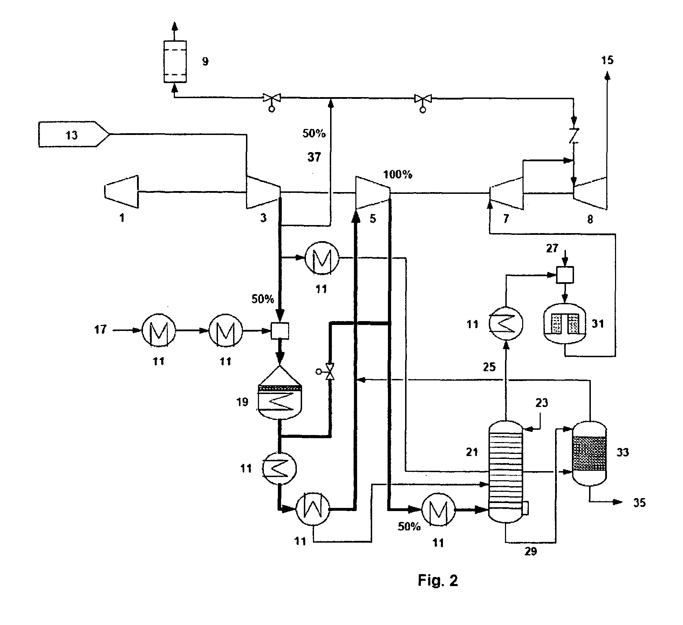

- Figur 2: ein Anlagenschaltbild für eine typische Zweidruckanlage zur Herstellung von Salpetersäure. Figur 2 entspricht Figur 1 mit dem Unterschied, dass der Expander 7 aus zwei Aggregaten, Expander 7 und Expander 8, besteht. Einer wird durch überschüssige Prozessluft 13 angetrieben, der zweite mittels Prozessgas kommend aus der Aufarbeitung. Hieraus ergeben sich Vorteile bezüglich der Regelbarkeit der Gesamtanlage.

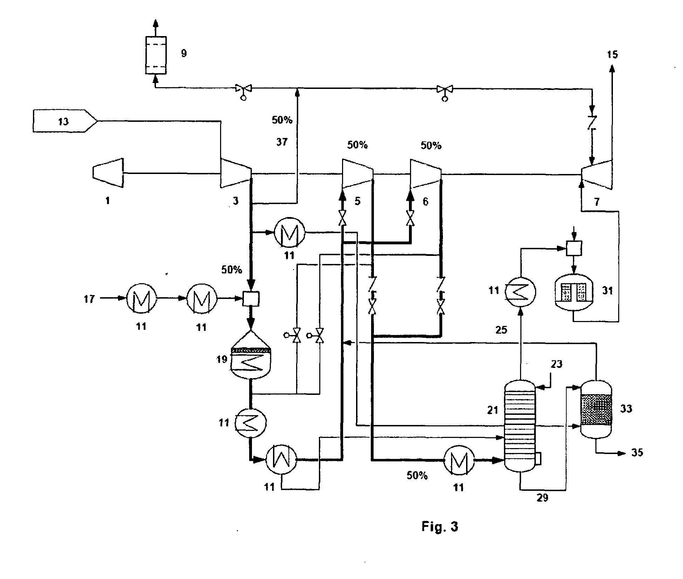

- Figur 3: eine Variante des in Figur 1 gezeigten Anlagenschaltbildes mit dem Unterschied, dass der NO-Verdichter 5 nicht einteilig mit Bypass, sondern zweiteilig 5, 6 ausgeführt ist. Im 100 % Lastfall arbeiten beide parallel, im 50 % Lastfall arbeitet nur einer davon und liefert 50 % des Prozessgases in die Aufarbeitung. Der zweite läuft leer mit oder wird ausgekoppelt. Dadurch ergeben sich Vorteile in der Regelbarkeit und im Wirkungsgrad der Gesamtanlage. Die Ausführung des NO-Verdichters 5, 6 kann als Einweller oder als Getriebeturbo ausgeführt werden. Der Expander 7 ist analog Variante 1 eingehäusig ausgeführt.

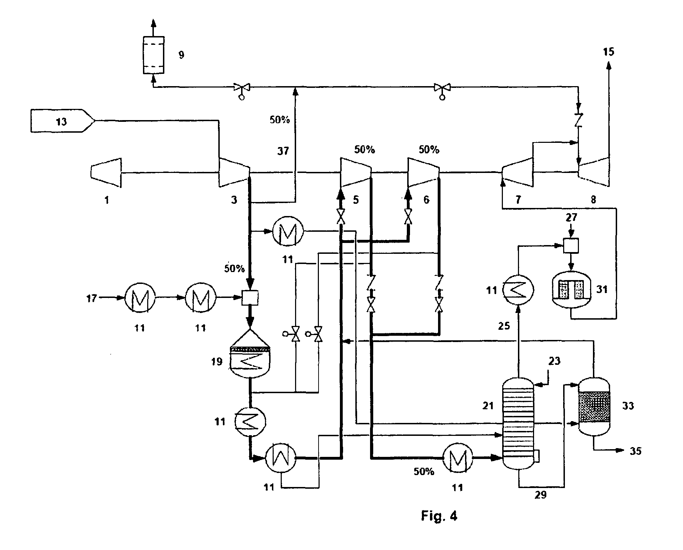

- Figur 4: eine Variante des unter Figur 3 gezeigten Anlagenschaltbildes mit dem Unterschied, dass der Expander 7 ähnlich wie in Figur 2 gezeigt aus 2 Aggregaten 7, 8 besteht.

## Patentansprüche

1. Verfahren zur Herstellung von Salpetersäure einer Konzentration im Bereich von 50 bis 76 % aus Ammoniak und sauerstoffhaltigem Gas nach dem Eindruck- oder Zweidruckverfahren, bei dem die Verbrennung des eingesetzten Ammoniaks mittels verdichteter Prozessluft, die in mindestens einem Verdichter (3) verdichtet wurde geschieht, und das durch die Verbrennung gebildete Nitrosegas mindestens teilweise von Wasser absorbiert wird, wodurch Salpetersäure entsteht, und das nicht absorbierte Restgas zwecks Gewinnung von Verdichterarbeit in mindestens einem Gasexpander (7) expandiert wird, wobei Verdichter (3), Gasexpander (7), ein oder zwei NO-Verdichter (5, 6) und Dampfturbine (1) eine von einer gemeinsamen Welle angetriebene Maschinengruppe bilden, **dadurch gekennzeichnet, dass** bei Unterlast zumindest ein Teil der verdichteten Prozessluft unter Umgehung des chemischen Prozesses mindestens einem Gasexpander (7) zugeführt wird.

2. Verfahren nach Anspruch 1, **dadurch gekennzeichnet, dass** die Herstellung der Salpetersäure nach dem Zweidruckverfahren erfolgt.

3. Verfahren nach einem der Ansprüche 1 bis 2, **dadurch gekennzeichnet, dass** das Verfahren in einer Anlage durchgeführt wird, die mindestens zwei Gasexpander umfasst.

4. Verfahren nach einem der Ansprüche 1 bis 3, **dadurch gekennzeichnet, dass** der Teil der verdichteten Prozessluft unter Umgehung des chemischen Prozesses mindestens einem Gasexpander (7), zugeführt wird, der einem weiteren Gasexpander (8), in welchem das nicht absorbierte Restgas expandiert wird, vor- oder nachgeschaltet ist.

5. Verfahren nach einem der Ansprüche 1 bis 4, **dadurch gekennzeichnet, dass** zumindest ein Teil der verdichteten Prozessluft, die unter Umgehung des chemischen Prozesses dem Gasexpander (7) zugeführt wird, erwärmt wird.

6. Verfahren nach einem der Ansprüche 1 bis 5, **dadurch gekennzeichnet, dass** das Verfahren in einer Anlage durchgeführt wird, die mindestens eine Absorptionseinrichtung (21) zur Absorption von Nitrosegas in Wasser umfasst, die in einem Lastbereich von 35 bis 100 % betrieben werden kann.

7. Vorrichtung zur Durchführung eines Verfahrens zur Herstellung von Salpetersäure nach einem der Ansprüche 1 bis 6.

8. Vorrichtung gemäß Anspruch 7, **dadurch gekennzeichnet, dass** sie eine Dampfturbine, mindestens einen Luftverdichter, mindestens einen NO-Verdichter (5) und mindestens einen Gasexpander (7) umfasst, wobei über eine Bypassleitung (37) und eine Steuerung eine Luftzuführung an verschiedenen Einlassöffnungen des bzw. der Gasexpander (7) erfolgen kann.

## Claims

1. A process for preparing nitric acid having a concentration in the range from 50 to 76% from ammonia and oxygen-comprising gas by the mono-pressure or dual-pressure process in which the combustion of the ammonia feed occurs by means of compressed process air which has been compressed in at least one compressor (3) and the nitrous gas formed by the combustion is absorbed at least partly by water, forming nitric acid, and the tailgas which has not been absorbed is expanded in at least one gas expander (7) in order to recover work of compression, compressor (3), gas expander (7), one or two NO compressors (5, 6) and steam turbine (1) forming a machine group driven by a common shaft, wherein at least part of the compressed process air is conveyed so as to bypass the chemical process and fed to at least one gas expander (7) in the case of low load.

2. The process according to claim 1, wherein the preparation of nitric acid is carried out by the dual-pressure process.

3. The process according to either of claims 1 and 2, wherein the process is carried out in a plant comprising at least two gas expanders.

4. The process according to any of claims 1 to 3, wherein the part of the compressed process air is conveyed so as to bypass the chemical process and fed to at least one gas expander (7) which is installed upstream or downstream of a further gas expander (8) in which the tailgas which has not been absorbed is expanded.

5. The process according to any of claims 1 to 4, wherein at least part of the compressed process air which is conveyed so as to bypass the chemical process and fed to the gas expander (7) is heated.

6. The process according to any of claims 1 to 5, wherein the process is carried out in a plant comprising at least one absorption facility (21) for the absorption of nitrous gas in water which can be operated in a load range from 35 to 100%.

7. An apparatus for carrying out a process for preparing nitric acid according to any of claims 1 to 6.

8. The apparatus according to claim 7 comprising a steam turbine, at least one air compressor, at least one NO compressor (5) and at least one gas expander (7), where air can be introduced at various inlet openings of the gas expander(s) (7) via a bypass line (37) and a control.

## Revendications

1. Procédé de fabrication d'acide nitrique d'une concentration dans la plage allant de 50 à 76 % à partir d'ammoniac et d'un gaz contenant de l'oxygène par un procédé à une pression ou à deux pressions, selon lequel la combustion de l'ammoniac utilisé a lieu au moyen d'un air de procédé comprimé, qui a été comprimé dans au moins un compresseur (3), et le gaz nitreux formé par la combustion est au moins partiellement absorbé par de l'eau, de l'acide nitrique étant ainsi formé, et le gaz résiduel non absorbé est expansé dans au moins un expanseur de gaz (7) pour récupérer l'énergie de compression, le compresseur (3), l'expanseur de gaz (7), un ou deux compresseurs de NO (5, 6) et une turbine à vapeur (1) formant un groupe de machines actionnées par un arbre commun, **caractérisé en ce qu'**en sous-charge, au moins une partie de l'air de procédé comprimé est introduite dans au moins un expanseur de gaz (7) en évitant le procédé chimique.

2. Procédé selon la revendication 1, **caractérisé en ce que** la fabrication de l'acide nitrique a lieu selon le procédé à deux pressions.

3. Procédé selon l'une quelconque des revendications 1 à 2, **caractérisé en ce que** le procédé est réalisé dans une installation qui comprend au moins deux expanseurs de gaz.

4. Procédé selon l'une quelconque des revendications 1 à 3, **caractérisé en ce que** la partie de l'air de procédé comprimé est introduite en évitant le procédé chimique dans au moins un expanseur de gaz (7), qui est connecté en amont ou en aval d'un expanseur de gaz supplémentaire (8) dans lequel le gaz résiduel non absorbé est expansé.

5. Procédé selon l'une quelconque des revendications 1 à 4, **caractérisé en ce qu'**au moins une partie de l'air de procédé comprimé qui est introduite dans l'expanseur de gaz (7) en évitant le procédé chimique est chauffée.

6. Procédé selon l'une quelconque des revendications 1 à 5, **caractérisé en ce que** le procédé est réalisé dans une installation qui comprend au moins un dispositif d'absorption (21) pour l'absorption de gaz nitreux dans de l'eau, qui peut être exploité dans une plage de charge allant de 35 à 100 %.

7. Dispositif pour la réalisation d'un procédé de fabrication d'acide nitrique selon l'une quelconque des revendications 1 à 6.

8. Dispositif selon la revendication 7, **caractérisé en ce qu'**il comprend une turbine à vapeur, au moins un compresseur d'air, au moins un compresseur de NO (5) et au moins un expanseur de gaz (7), une introduction d'air dans diverses ouvertures d'entrée du ou des expanseurs de gaz (7) pouvant avoir lieu par le biais d'une conduite de dérivation (37) et d'un mécanisme de commande.
